# EUROPÄISCHE PATENTSCHRIFT

(11) **EP 1 392 107 B1**
(45) Veröffentlichungstag und Bekanntmachung des Hinweises auf die Patenterteilung: **19.01.2005**
(21) Anmeldenummer: 02727151.9
(22) Anmeldetag: 05.06.2002
(51) Int. Cl.: A01J 5/04

(54) **MELKANLAGE UND VERFAHREN ZUR REDUKTION VON SCHALLEMISSIONEN IN EINER MELKANLAGE**
MILKING PLANT AND METHOD FOR REDUCING SOUND EMISSIONS IN A MILKING PLANT
DISPOSITIF DE TRAITE ET PROCEDE DE REDUCTION D'EMISSIONS SONORES DANS UN DISPOSITIF DE TRAITE

(30) Priorität: 07.06.2001 CH 103601
(43) Veröffentlichungstag der Anmeldung: 03.03.2004
(73) Patentinhaber: Moser Stalleinrichtungen, 8580 Amriswil (CH); Bitec Engineering, 8590 Romanshorn (CH)
(72) Erfinder: BILGERY, Erwin, CH-8590 Romanshorn (CH)
(74) Vertreter: Volpert, Marcus, Dr.
(86) Internationale Anmeldenummer: PCT/CH2002/000292
(87) Internationale Veröffentlichungsnummer: WO 2002/098211

(56) Entgegenhaltungen:
- EP-A- 0 442 383
- EP-A- 1 068 796
- GB-A- 700 274
- GB-A- 2 128 065
- US-A- 2 340 454
- US-A- 4 616 215
- US-A- 5 289 848

## Beschreibung

Die Erfindung bezieht sich auf eine Melkanlage gemäss den oberbegrifflichen Merkmalen des Anspruchs 1. Weiterhin bezieht sich die Erfindung auf ein Verfahren zur Reduktion von Schallemissionen in einer Melkanlage.

Bekannte Melkanlagen bestehen aus zahlreichen Komponenten, deren Zusammenspiel das Melken von Kühen, Schafen oder Ziegen ermöglicht. Mittels eines Vakuumpumpenaggregates, das eine Vakuumpumpe und deren Antriebsmotor umfasst, wird ein Vakuum erzeugt. Dieses Vakuum wird in einer Luftleitung angelegt, an welche das eigentliche Melkzeug angeschlossen wird. Um das Vakuum stabil zu halten, ist in der Regel ein Vakuumausgleichstank vorgesehen. Der Vakuumausgleichstank stellt ein gewisses Volumen an Luft zur Verfügung, wodurch ein erster Ausgleich von Vakuumschwankungen erfolgen kann. Ein weiterer Ausgleich erfolgt mittels eines Vakuumregelventils. Über Öffnen bzw. Schliessen des Vakuumregelventils wird der Einlass von Aussenluft in das System so gesteuert, dass das Vakuum auf einem stabilen Niveau gehalten wird.

Weiterhin ist in einer Melkanlage zumindest ein Pulsator vorgesehen. Der Pulsator besteht in der Regel aus einem oder zwei unabhängigen, pneumatisch oder elektrisch direkt (Anker) oder indirekt (Membrane) betätigten Ventilen, mit dessen Hilfe im Melkzeug selber kontinuierlich zwischen Unterdruck und Normaldruck gewechselt wird, was den eigentlichen Melkvorgang bewirkt. Das Melkzeug besteht aus vier Zitzenbechern und einem Sammelstück. Es wird auf die Zitzen des zu melkenden Tieres aufgesetzt. Das Melkzeug weist zwei Verbindungsschläuche auf. So hat es zum einen einen Pulsschlauch, der über den Pulsator mit der Luftleitung verbunden ist und über den der Melkvorgang bestehend aus Saug- und Entlastungsphase vermittelt wird.

Weiterhin weist das Melkzeug einen Milchschlauch auf, mit dem die Milch abgeführt wird. Er mündet entweder im Melkeimer oder aber in einer Milchtransportleitung, der sog. Melkleitung. Mit dieser Melkleitung wird die Milch einer Endeinheit, dem sog. Milchsammelbehälter, zugeführt. In diesen Behälter strömt die Milch ein und wird bei Erreichen eines gewissen Niveaus mittels einer Milchpumpe abgeleitet in den eigentlichen Milchtank, in dem die Milch gekühlt und bis zum Abtransport aufbewahrt wird. Schliesslich ist auch noch ein Sicherheitsabscheider vorgesehen. Dieser ist mit dem Milchsammelbehälter verbunden. Beim Versagen der Melkanlagesteuerung kann sich der Milchsammelbehälter überfüllen. Die Milch fliesst dann in den Sicherheitsabscheider. In diesem wird in der Folge ein Schwimmerventil angehoben, um den Ausgang bzw. die Verbindung zum Vakuumausgleichstank zu verschliessen. Der Betrieb der Melkanlage ist in diesem Falle unterbrochen. Die Milch im Sicherheitsabscheider muss manuell abgelassen und entsorgt werden.

Derartige Melkanlagen sind, wenn sie in Betrieb sind, eine Quelle ständigen Lärms. Dieser rührt von verschiedenen Elementen einer Melkanlage her. Als Hauptlärm und Vibrationen erzeugende Elemente sind zu nennen:

Als erstes sei hier das Vakuumpumpenaggregat angeführt. Es erzeugt zum einen beispielsweise in Form des Motorengeräusches Schall, der über die Luft ausgebreitet wird und der sich im hörbaren Bereich befindet. Weiterhin wird der Schall jedoch auch im Luftleitungssystem ausgebreitet. Da die Luftleitung über kraftschlüssige Verbindungen am Melkgerüst und sonstigen stützenden Elementen befestigt ist, wird letztendlich das gesamte Melkgerüst in Schwingung versetzt. Auf diese Art und Weise können die Schwingungen auch auf Lebewesen, die mit dem Melkgerüst in Verbindung stehen, übertragen werden. Ferner kann der durch das Vakuumpumpenaggregat erzeugte Schall auch über die Bausubstanz in Form von sog. Körperschall ausgebreitet werden. Letztlich kann dies sogar dazu führen, dass die Schwingungen über die gesamte Gebäudekonstruktion verbreitet werden. Ein weiterer unangenehmer Nebeneffekt kann überdies dadurch auftreten, dass Schallreflexionen im Vakuumtank und in den Luftleitungen auftreten und somit eine Vervielfachung der Schallfrequenz herbeiführen. Im weiteren kann es zu Interferenzerscheinungen kommen, wodurch die Amplituden der Störungen verstärkt werden. Dadurch könnte ein Frequenzbereich erreicht werden, welcher der Resonanzfrequenz des Melkstandgerüstes entspricht und ausreichend kräftig ist, um dieses auch anzuregen.

Als weitere Störungsquelle sind die Pulsatoren zu betrachten. Pulsatoren werden heutzutage in der Regel elektrisch betätigt. Die direkt betätigten Pulsatoren weisen ein Ankerventil auf, dessen Aufprall in der Endlage einen kräftigen, schlagartigen Impuls provoziert. Dieser wird in Form von Körperschall direkt in die Luftleitung bzw. das Melkstandgerüst eingeleitet. Das Schlaggeräusch ist akustisch gut wahrnehmbar. Hingegen sind die Pulsatoren mit indirekter Ventilsteuerung leiser, da eine Membrane wenig Masse aufweist. Nachteilig ist hier besonders, dass die Öffnen- uns Schliessbewegung sehr schnell erfolgt und somit ein kräftiger Luftstoss in die Luftleitung schiesst, welcher sich ähnlich nachteilig auswirken kann. Diese Schallemission erfolgt zum einen über das Vakuum als auch über Körperschall. Durch eine Parallelschaltung aller Pulsatoren einer Anlage kann eine Vervielfachung der Schlagintensität auftreten. Ein weiterer negativer Effekt ist, dass durch die Pulsierung in gleichmässigen Abständen Luft in die Luftleitung eintritt. Das Vakuum wird dadurch gestört und kann eine Gegenreaktion des empfindlichen Vakuumregelventils auslösen.

Als dritte Geräuschquelle sei das Vakuumregelventil angeführt. Das Vakuumregelventil variiert den Lufteinlass, so dass das Vakuum konstant gehalten werden kann. Die Geschwindigkeit der eintretenden Luft ist von verschiedenen Faktoren abhängig. So ist sie von der Verarbeitungsgüte des Ventils abhängig, aber auch von der Lage über dem Meeresspiegel, wo die Melkanlage installiert ist, und damit vom Atmosphärendruck. In einer Höhe von 1.500 m kann die Geschwindigkeit der eintretenden Luft sogar Schallgeschwindigkeit erreichen. Sobald die Schallgeschwindigkeit jedoch erreicht ist, erfolgt für kurze Zeit ein Strömungsabriss. Dieser Zustand ist mit einem Pfeifgeräusch verbunden. Der Eintritt von Luft in das Vakuumsystem nach Öffnen des Regelventils wird jedoch in jedem Fall wahrgenommen, da die Luft relativ schnell in das Vakuumsystem eintritt, so dass Turbulenzen und Schwingungen auftreten. Darüber hinaus ist auch die Milchpumpe eine der Hauptlärmquellen.

Die erzeugten Geräusche, Vibrationen und Schwingungen werden über die gesamte Melkanlage verbreitet. Letztlich werden sie auch von den Tieren wahrgenommen, sowohl aufgrund einer Übertragung durch die Luft als auch aufgrund von Körperschall, beispielsweise über die Melkgerüste, an welche sich die Tiere während des Melkvorgangs anlehnen. Hochleistungstiere sind jedoch äusserst empfindlich und reagieren bereits bei geringsten Störungen durch eine reduzierte Milchabgabe. Dadurch wiederum kann das Allgemeinbefinden der Tiere empfindlich gestört werden bzw. im Extremfall führt ein zurückgehaltener Milchfluss zu Euterentzündungen.

Im Stand der Technik gibt es bis jetzt lediglich zwei Ansätze, diese Schall- und Vibrationsauswirkungen zu reduzieren. So ist bekannt, sämtliche Rohre, insbesondere die Luftleitung, mit Gummi zu umhüllen und so die Ausbreitung des Schalls im Rohr zu reduzieren. Ein anderer Versuch ist darin zu sehen, dass im Melkbereich Musik, insbesondere klassische Musik, abgespielt wird, wodurch der Milchfluss der Tiere gesteigert und deren psychischer Zustand verbessert sein soll. Letztlich sind die bekannten Lösungsansätze jedoch unbefriedigend und unzureichend.

Beim Vakuumregelventil treten bei herkömmlichen Melkanlagen weitere Probleme auf. So hat die vom Pulsator erzeugte Druckwelle zur Folge, dass das empfindliche Vakuumregelventil zu schwingen beginnt, obwohl das Vakuum insgesamt betrachtet stabil ist. Dadurch wird dem Gesamtsystem zuviel Luft zugeführt, die erst durch die Vakuumpumpe wieder entfernt werden muss. In der Folge kann das Vakuum erheblich absinken, und zwar innerhalb von ca. 1 Sekunde. Durch die dauernde Betätigung der Vakuumpumpe steigt es jedoch relativ rasch wieder an. Trotzdem herrscht im System eine Vakuuminstabilität, die, um einen guten Melkvorgang zu gewährleisten, vermieden werden sollte.

Aus der US-A-2 340 454 ist eine Melkmaschine bekannt, bei der die Strömungsgeschwindigkeit der Luft durch Schrauben oder andere geeignete Mittel reguliert werden kann.

Dokument US-A-5,289,848 offenbart ein Verfahren zur Reduktion von Schallemissionen durch Absorption der Schallemissionen mit einem Filterelement.

Eine Melkanlage nach dem Oberbegriff des Patentanspruchs 1 ist aus der EP-A-0 442 383 bekannt. Diese Melkanlage zeichnet sich dadurch aus, dass sie aus einem Volumenstromsensor, einem oder mehreren Drucksensoren, einem oder mehreren Temperatursensoren und einem Regelventil besteht, die über eine stationäre Datenverarbeitungsanlage verknüpft werden, wobei die Drucksensoren als eingebaute Aufnehmer nahe den Euterzitzen an einer durch Vakuuminstabilität charakterisierten Stelle angeordnet sind.

Der Erfindung liegt die Aufgabe zugrunde, eine Melkanlage der vorgenannten Art zu schaffen, deren Vibrations- und Schallemissionen stark reduziert sind. Ferner soll die bereitgestellte Melkanlage eine verbesserte Toleranz gegenüber geringen Vakuumschwankungen aufweisen. Weiterhin soll ein Verfahren zur Reduktion der Schallemission in Melkanlagen bereitgestellt werden.

Diese Aufgabe wird gelöst durch eine Melkanlage nach Anspruch 1 und ein Verfahren nach Anspruch 14. Vorteilhafte Ausgestaltungen sind Gegenstand der Unteransprüche.

Eine erfindungsgemässe Melkanlage besteht aus den folgenden, zum Stand der Technik bereits näher beschriebenen Komponenten: einem Vakuumpumpenaggregat, einem Vakuumausgleichstank, einer Stammleitung zwischen Vakuumpumpe und Vakuumausgleichstank, einem Vakuumregelventil, einer Luftleitung, zumindest einem Pulsator, zumindest einem Melkzeug, das über einen Pulsschlauch mit der Luftleitung verbunden ist und über einen Milchschlauch mit einer Melkleitung verbunden ist, einer Melkleitung, einem Milchsammelbehälter und einem Sicherheitsabscheider. Das Vakuumregelventil ist unmittelbar mit dem Vakuumausgleichstank verbunden. Da ein Vakuumregelventil aus dem Stand der Technik beim Einlass von Aussenluft häufig Geräusche bis hin zu Pfeiftönen erzeugt und das Vakuumregelventil weiterhin äusserst empfindlich auf Schwankungen des Vakuums reagiert, wie oben erläutert, führt die Kopplung des Vakuumregelventils mit dem Vakuumausgleichstank dazu, dass das Vakuum insgesamt stabiler gehalten werden kann, da eine Veränderung des Vakuums in dem relativ grossen Volumen des Vakuumausgleichstanks erfolgen muss, ehe das Vakuumregelventil öffnet. Da jedoch, wie bereits geschildert, das Öffnen des Vakuumregelventils und der danach folgende Lufteintritt eine bedeutende Lärmquelle im System darstellt, bringt dies einen erheblichen Vorteil, nämlich eine starke Reduktion der Schallemission, mit sich.

Erfindungsgemäß ist vorgesehen, dass die vom Sicherheitsabscheider dem Vakuumausgleichstank zugeführte Luft nicht unmittelbar im Vakuumausgleichstank mündet, sondern eine Trennung vorgenommen wird. Sie erfolgt durch Zwischenschalten von mehreren parallelen schlauchförmigen Trennelementen.

Diese parallelen schlauchförmigen Trennelemente münden über einen Dom im Vakuumausgleichstank. Damit wird eine Trennung des Körperschalls innerhalb des Vakuumsystems erreicht. Ausserdem werden die höherfrequenten Schwingungen, welche durch das Vakuumregelventil verursacht werden, gedämpft.

Es ist weiterhin vorzugsweise vorgesehen, dass am Vakuumregelventil ein Diffusor vorgesehen ist, wodurch die Geschwindigkeit der in den Vakuumausgleichstank einströmenden Luft so stark verringert wird, dass dieses Geräusch um vier bis fünf Dezibel vermindert werden kann. Der Diffusor weist vorzugsweise innenseitig eine glatte Oberfläche auf, um eine ungehinderte Luftströmung zu gewährleisten. Als Werkstoff ist vorzugsweise mit Glasfasergewebe verstärktes Polyester vorgesehen. Weiterhin ist vorzugsweise vorgesehen, dass die Luftzuführung des Vakuumregelventils extern erfolgt, anders ausgedrückt, dass bei Öffnen des Vakuumregelventils saubere Luft aus dem Aussenbereich zugeführt wird, beispielsweise über eine Schlauchleitung.

Ein weiteres bevorzugtes Ausführungsbeispiel der Erfindung sieht vor, dass die Stammleitung zwischen Vakuumpumpe und Vakuumausgleichstank nicht die Form eines starren Rohres, sondern wenigstens eines flexiblen, geschwungenen Schlauches annimmt. Durch die Verwendung eines Schlauches anstelle des Rohres wird bereits eine wirksame Reduktion der Körperschallausbreitung erzielt. Weiterhin ist vorgesehen, dass mehrere, insbesondere zwei Schläuche parallel geführt werden, damit bei relativ geringem Durchmesser des Schlauches die Fliessgeschwindigkeit der Luft unter einer bestimmten Grenze liegt. Weiterhin ist vorgesehen, dass dieser Schlauch tangential in den Vakuumausgleichstank mündet; anders ausgedrückt, mündet dieser tangential zur Hauptströmungsrichtung der Luft. Dadurch wird ein kreisförmiger Luftstrom durch den Tank begünstigt. Mit dem geordneten Ein- und Austritt der Luft werden die Turbulenzen niedrig gehalten, was ebenfalls zu einer Reduktion der Schallemission führt. Ferner ist im Vakuumausgleichstank eine Trennwand vorgesehen. Diese erzwingt zum einen den kreisförmigen Luftstrom und zum anderen wird das kräftige Ansauggeräusch der Vakuumpumpe gegenüber der Melkseite abgeschottet. Innerhalb dieser Trennwand ist ein Luftfilter eingebettet. Dieser verteilt den Luftstrom auf die gesamte Fläche, die Strömung wird dabei entsprechend verlangsamt und damit geräuscharmer.

Ein weiteres, bevorzugtes Ausführungsbeispiel betrifft den zumindest einen Pulsator. Er wird flexibel fixiert, beispielsweise über Gummischläuche an der Bausubstanz (Decke), am Melkstandgerüst oder an der Luftleitung aufgehängt. Dadurch wird der vom Pulsator erzeugte Schall, insbesondere das durch das Ankerventil erzeugte Schlaggeräusch, an einer Übertragung auf die Luftleitung und dessen Ausbreitung auf das Melkstandgerüst gehindert, d.h. schalltechnisch entkoppelt.

Ein weiteres Ausführungsbeispiel sieht vor, dass die Luftleitung durch einen Puffertank, welcher in unmittelbarer Nähe am Pulsator angeordnet ist, ersetzt wird. Dieser Puffertank ist mit einer elastischen Leitung mit geringem Durchmesser, insbesondere Gummischlauch, mit dem Vakuumausgleichstank verbunden. Dadurch kann ebenfalls eine Uebertragung auf Grund von Körperschall bzw. die Ausbreitung des Schalles im Vakuum verhindert werden. Weiterhin ist vorgesehen, dass das Volumen im Puffertank etwa 30 Liter pro angeschlossenem Pulsator betragen soll. Der Durchmesser der Puffertankes soll entsprechend dem Abstand der angeschlossenen Pulsatoren bemessen sein, derart, dass das vorgesehene Volumen unmittelbar dem Pulsator zugeordnet werden kann. Dadurch gelangt diese Druckwelle nicht in den Vakuumausgleichstank und kann somit auch keine Regulation des Vakuumregelventils hervorrufen.

Eine besondere Komponente ist die Reduktion der Geschwindigkeit der strömenden Luft in den luftführenden Elementen. Sie beträgt in bekannten Melkanlagen weit über 20 m/s; in einer erfindungsgemässen Anlage ist sie auf weniger als 8 m/s reduziert. Mittels der beschriebenen Massnahmen (einzeln oder in Kombination) werden die Schall- und Vibrationsemissionen stark reduziert. Dadurch kann insbesondere verhindert werden, dass mittels Körperschall die Vibrationen auf das Tier übertragen werden. Somit wird nicht nur das Wohlbefinden des Tieres, sondern auch des Melkers gesteigert. Die Tiergesundheit wird ebenfalls verbessert. Letztlich erfolgt hierdurch eine Qualitätssteigerung der Milch und auch eine grössere Milchmenge. Fehlleistung und Ausfälle des Tiers können reduziert werden.

Das erfindungsgemässe Verfahren zur Reduktion von Schallemissionen in einer Melkanlage sieht vor, dass die Strömungsgeschwindigkeit der Luft in den luftführenden Teilen der Melkanlage reduziert wird. Dadurch wird die Schallemission bedeutend reduziert. Dies ist auf zwei physikalische Ursachen zurückzuführen. Zum einen führt ein langsameres Strömen der Luft und damit langsameres Vorbeiführen an den Elementen der Melkanlage dazu, dass Geräusche, beispielsweise Pfeifgeräusche, die dadurch entstehen, dass die Luft mit einer hohen Geschwindigkeit an beispielsweise einer Kante vorbeiströmt, grösstenteils bis gänzlich vermieden werden. Weiterhin führt die Reduktion der Luftgeschwindigkeit bei gleichbleibender Frequenz des Schalles dazu, dass die Amplitude des Schalles niedriger gehalten wird. Eine Reduktion der Schalleistung hat zweierlei Konsequenzen. Zum einen wird das störende, oft anzutreffende Frequenzband um 200 Hz von Mensch und Tier nicht mehr als solches wahrgenommen, zum anderen ist der Schallpegel im Bereich des Melkstandes dann zu schwach, um das Melkstandgerüst noch in Resonanz zu versetzen. Es sind allenfalls rein taktil leichte Vibrationen der Anlage zu spüren.

Ein bevorzugtes Ausführungsbeispiel des erfindungsgemässen Verfahrens sieht vor, dass die Luft vom Vakuumausgleichstank tangential zur Hauptstromrichtung zu- und abgeleitet wird. Dadurch wird der Luft eine gewisse Strömungsrichtung aufgezwungen, welche dazu führt, dass das Aufkommen von Turbulenzen und die damit verbundenen hohen Luftgeschwindigkeiten die zu starken Reflexionen an den verschiedenen Stellen im Tank führen können, weitgehend vermieden werden. Weiterhin ist vorgesehen, dass die Luft der Vakuumpumpe vom Vakuumausgleichstank über eine Stammleitung in Form von zwei flexiblen gebogenen Schläuchen zugeführt wird. Der Einsatz von gebogenen Schläuchen führt dazu, dass die mechanische Bewegung (Vibration) des Pumpenaggregates sich nicht linear zum angeschlossenen Vakuumausgleichtank fortpflanzen kann. Durch die Verwendung eines Schlauches mit geringem Innendurchmesser, wird der Luftstrom an der Innenwand abgebremst, somit wird bereits ein wesentlicher Anteil der störenden Schallwellen der Vakuumpumpe absorbiert. Durch den Widerstand, welcher der strömenden Luft entgegengesetzt wird, resultiert ein entsprechender Druckabfall in der Verbindungsleitung. Mit zunehmender Druckdifferenz zwischen Ein- und Ausgang einer Leitung nimmt auch die Strömungsgeschwindigkeit zu. Um die Strömungsgeschwindigkeit niedrig zu halten, ist die Erhöhung der Transportkapazität durch den Einsatz von mindestens einer zweiten Schlauchverbindung erforderlich.

Vorzugsweise sieht das erfindungsgemässe Verfahren darüber hinaus vor, dass die Luft, die dem Vakuumausgleichstank über das Regelventil zugeführt wird, über einen Diffusor erfolgt. Hier wird das physikalische Prinzip angewendet, dass bei Erweiterung des Durchmessers des Durchtritts, an dem Luft durchtritt, die Strömungsgeschwindigkeit der Luft reduziert wird.
Nachfolgend wird die Erfindung anhand der Zeichnung näher erläutert und beschrieben. Es zeigen:
- Fig. 1: eine aus dem Stand der Technik bekannte Melkanlage in schematischer Darstellung;
- Fig. 2: einen Ausschnitt aus der erfindungsgemässen Melkanlage in Draufsicht;
- Fig. 3: eine Seitenansicht der Melkanlage gemäss Fig. 2;
- Fig. 4: eine Seitenansicht auf ein weiteres Detail einer erfindungsgemässen Melkanlage; und
- Fig. 5: eine bevorzugte Aufhängung eines Pulsators.

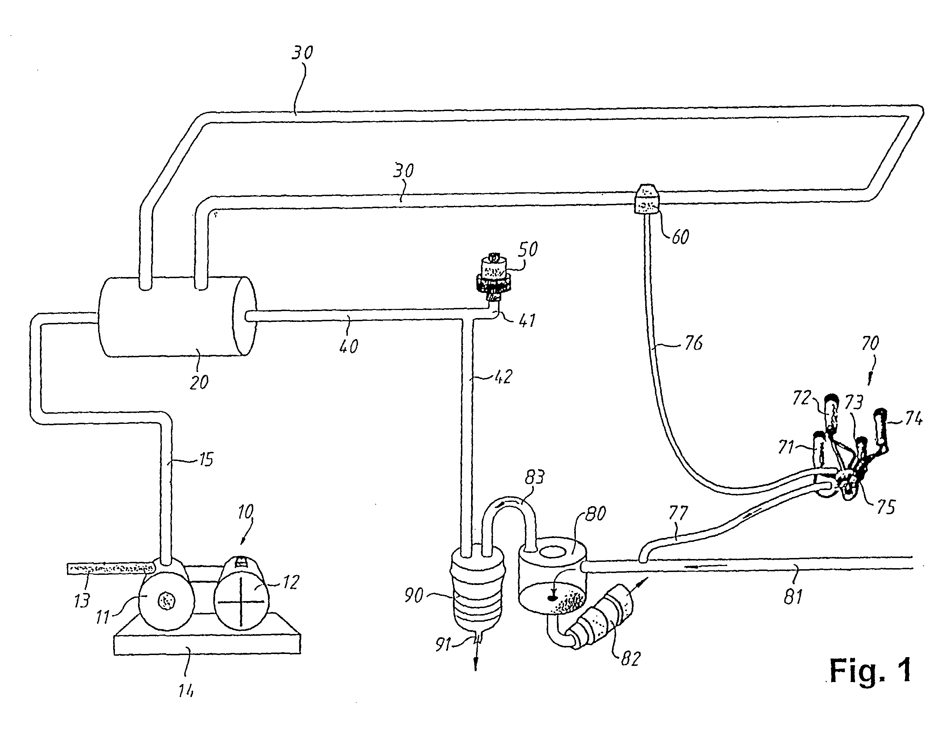

Wie aus Fig. 1 ersichtlich, besteht eine aus dem Stand der Technik bekannte Melkanlage aus mehreren Komponenten. Diese an sich bekannten Komponenten weist auch die erfindungsgemässe Melkanlage auf. Sie sollen aus diesen Gründen hier näher erläutert und beschrieben werden. So weist eine Melkanlage ein Vakuumpumpenaggregat 10 auf, das aus der eigentlichen Vakuumpumpe 11, dessen Antriebsmotor 12 und einem Auslass 13 besteht. Das Vakuumpumpenaggregat 10 ruht auf einer Unterlage 14. Durch stetes Abpumpen von Luft durch die Vakuumpumpe 11 wird im luftführenden System der Melkanlage Vakuum erzeugt. Eine Stammleitung 15 verbindet die Vakuumpumpe 11 mit einem Vakuumausgleichstank 20. Vom Vakuumausgleichstank 20 geht eine Luftleitung 30 ab, die im Ausführungsbeispiel der Fig. 1 als Ringleitung gestaltet ist. Die Luftleitung 30 kann jedoch auch "blind" enden, eine Kreisführung ist nicht notwendig. Weiterhin mündet in den Vakuumausgleichstank 20 eine luftführende Leitung 40. Über die luftführende Leitung 40 wird dem Vakuumausgleichstank 20 zum einen über die Zuleitung 41 Luft vom Vakuumregelventil 50 zugeführt, zum anderen wird mittels der Leitung 40 über die Leitung 42 der Sicherheitsabscheider 90 belüftet bzw. vakuumiert. Das verhältnismässig grosse Luftvolumen des Vakuumausgleichstanks 20 dient dazu, das Vakuum stabil zu halten, da geringfügige Änderungen in der Beaufschlagung des Vakuums durch dieses grosse Volumen ausgeglichen werden können. Die Feinregulierung des Vakuums erfolgt über das Vakuumregelventil 50, das je nach Bedarf öffnet oder schliesst und somit von aussen Luft zuführt bzw. diese Luftzufuhr unterbindet.

Ein wesentlicher Teil der Melkanlage ist der Pulsator 60. Er beaufschlagt das Melkzeug 70 zyklisch mit Vakuum. Das Melkzeug 70 besteht aus vier Zitzenbechern 71 bis 74 und dem Sammelstück 75. Es ist über einen Pulsschlauch 76 mit dem Pulsator 60 verbunden und über den Milchschlauch 77 mit der Milchleitung 81. Der Pulsator 60 ist entweder fest mit der Luftleitung 30 verbunden oder befindet sich auf einem transportablen Element, das an der Luftleitung 30 ansteckbar ist. Die gemolkene Milch wird über den Milchschlauch 77 und die Milchleitung 81 einer Endeinheit, nämlich einem Milchsammelbehälter 80 zugeführt. Darin wird vom Melkzeug 70 einströmende Milch gesammelt und portionsweise mittels der Milchpumpe 82 in den Endsammelbehälter, den sog. Milchtank, abgepumpt. Sollte wegen einer technischen Störung der Milchsammelbehälter 80 überlaufen, so ist ein Sicherheitsabscheider 90 vorgesehen, in den über eine Leitung 83 der Überschuss an Milch abgeleitet wird, um ein Eindringen von Milch in das luftführende System zu verhindern. Die im Sicherheitsabscheider 90 gehaltene Milchmenge darf nicht in den Konsum gelangen. Die Fliessrichtung der Milch in den milchführenden Elementen der Melkanlage ist durch die Pfeile dargestellt. Die grundsätzliche Numerierung der einzelnen Bestandteile der Melkanlage wurde in den weiteren Figuren sinngemäss beibehalten bzw. durch eine Ziffer ergänzt.

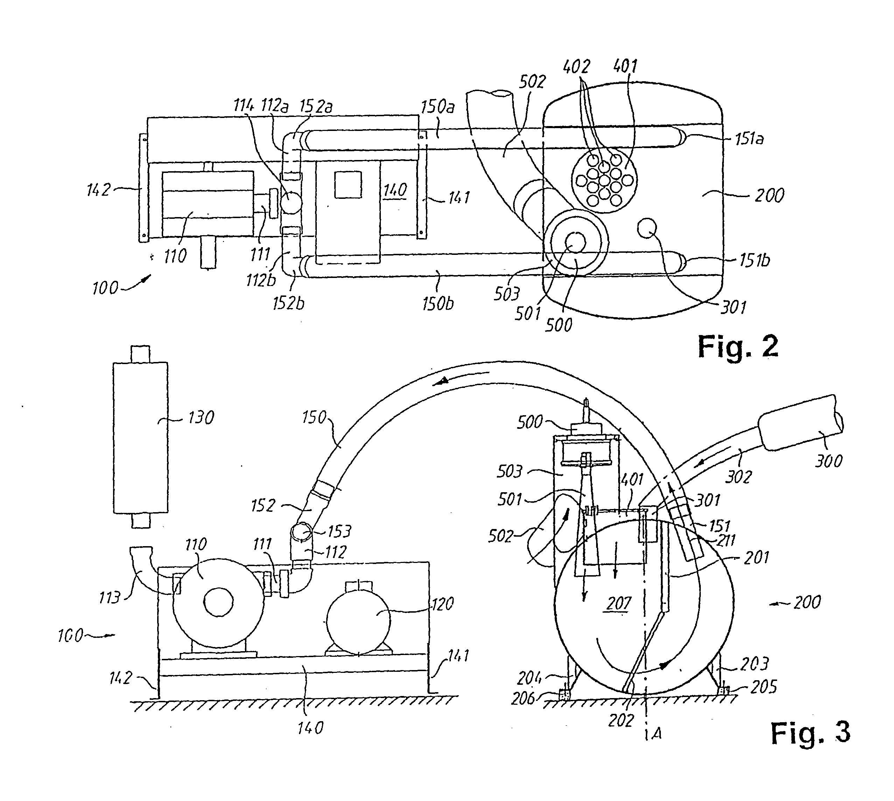

Die Fig. 2 und 3 zeigen eine Draufsicht bzw. Seitenansicht eines erfindungsgemässen Vakuumpumpenaggregates 100 mit Stammleitung 150, Vakuumregelventil 500 und Vakuumausgleichstank 200. Zum besseren Verständnis ist die Strömungsrichtung der Luft in Fig. 3 durch Pfeile angedeutet. Das Vakuumpumpenaggregat 100 wird nun erfindungsgemäss auf elastischen, insbesondere Gummifüssen 141, 142 gelagert, wodurch die Schallübertragung auf den Untergrund reduziert wird. Das Vakuumpumpenaggregat 100 besteht aus der eigentlichen Vakuumpumpe 110 und dessen Antriebsmotor 120, die auf einer Chassis 140 angeordnet sind. Die Vakuumpumpe 110 weist zum einen eine Abluftleitung 113 auf, die im Auslass 130 mündet ( hier nicht dargestellt). Weiterhin weist die Vakuumpumpe 110 eine Zuleitung 111 auf, die über die Leitung 112 in die Stammleitung 150 mündet. Die Stammleitung 150 ist über ein Zwischenstück 152 mit der Zuleitung 112 verbunden. Weiterhin ist vorgesehen, dass diese Verbindung gelenkig erfolgt, insbesondere über ein einstellbares Rohrgewinde 153, wodurch die Position der Stammleitung 150 je nach räumlicher Situation verändert werden kann. Dabei ist erfindungsgemäss vorgesehen, dass die Stammleitung 150 aus einem flexiblen Schlauchmaterial besteht, was sich besonders positiv auf die Verhinderung der Luftund Körperschallausbreitung auswirkt.

Weiterhin ist, wie aus Fig. 2 ersichtlich, vorgesehen, dass anstelle einer einzigen Stammleitung 150 (vgl. Fig. 1, Referenzzeichen 15) zwei Stammleitungen 150a und 150b vorgesehen sind. Es ist auch möglich, mehr als zwei Stammleitungen 150a, 150b vorzusehen, beispielsweise drei bis zehn. Diese erfüllen die erfindungswesentlichen Eigenschaften gleichermassen. Die in Richtung der Vakuumpumpe 110 strömende Luft wird mittels des Zwischenstücks 114 wieder vereinigt. In Analogie zu den beiden Stammleitungen 150a, 150b sind auch zwei Zuleitungen 112a, 112b bzw. 152a, 152b vorgesehen. Durch diese Aufteilung des Luftstromes in zwei Stammleitungen 150a, 150b wird eine weitere Lärmverringerung erreicht. Die beiden Stammleitungen 150a, 150b münden über entsprechend zwei Endstücke 151 a, 151 b im Vakuumausgleichstank 200.

Weiterhin ist erfindungsgemäss vorgesehen, dass die Stammleitung 150 tangential im Vakuumausgleichstank 200 mündet. Damit wird der Luftstrom vom Vakuumausgleichstank 200 kommend bei Eintritt in die Stammleitung 150 von seiner Hauptströmungsrichtung nicht abgelenkt. Diese tangentiale Luftzuführung kann in flachen Winkeln relativ zur Hauptachse A des Vakuumausgleichstanks 200 erfolgen. Vorzugsweise ist vorgesehen, dass die tangentiale Luftzuführung in einem Winkel von 5 bis 30°, insbesondere von ca. 16°, erfolgt, gebildet durch die Hauptachse A des Vakuumausgleichstanks 200 und die Mittellinie 211 der Luftführung. Die in den Vakuumausgleichstank 200 einströmende Luft (z. B. von der Luftleitung oder einem Puffertank 300 kommend) strömt gleichmässig durch das Innere 207 des Vakuumausgleichstanks 200, angedeutet durch einen Pfeil. Eine im Vakuumausgleichstank 200 vorgesehene Trennwand 201 erzwingt eine kreisförmige und günstigere Luftführung. Darüber hinaus ist vorzugsweise vorgesehen, dass die Luftströmung durch einen engmaschigen Filter 202 geführt wird. Die Passage des Luftstroms verteilt sich dadurch annähernd auf die gesamte Fläche des Filters. Zum einen werden hierdurch höhere Frequenzen absorbiert und zum anderen werden für die Vakuumpumpe schädliche Fremdkörper zurückbehalten.

Eine weitere Schalldämpfung wird dadurch erreicht, dass die Füsse 203, 204 des Vakuumausgleichstanks 200 auf Gummifüssen oder ähnlichen dämpfenden Materialien 205, 206 auf dem Untergrund aufstehen. Es ist weiterhin vorzugsweise vorgesehen, dass das Vakuumregelventil 500 unmittelbar mit dem Vakuumausgleichstank 200 verbunden ist. Zudem ist vorgesehen, dass das Vakuumregelventil 500 über einen Diffusor 501 in den Vakuumausgleichstank 200 mündet. Hierdurch wird die über das Vakuumregelventil 500 einströmende Luft, angedeutet durch entsprechende Pfeile, durch das sich erweiternde Lumen des Diffusors 501 dem Vakuumausgleichstank 200 zugeführt. Dadurch wird die Strömungsgeschwindigkeit der zugeführten Luft reduziert, was wiederum zu einer Reduktion der dabei entstehenden Geräusche führt.

Weiterhin ist vorgesehen, dass das Vakuumregelventil 500 von einem zylinderförmigen Behälter 503 umgeben ist. Der Behälter 503 isoliert zum einen das Vakuumregelventil 500 akustisch von seiner Umgebung, zum anderen bewirkt es eine gezielte Luftzufuhr zum Vakuumregelventil 500. Es ist zudem vorgesehen, dass dem Vakuumregelventil 500 Umgebungsluft über einen Schlauch 502 zugeführt wird, wobei der Schlauch 502 vorzugsweise im Aussenbereich der Melkanlage mündet und so stets frische Luft zugeführt wird, die vorzugsweise staubfrei ist. Wenn das Vakuumpumpenaggregat 100 von einer Schallschutzhaube zugedeckt wird, dann wird eine zusätzliche Einrichtung zur Kühlung benötigt. Alternativ bietet sich die Möglichkeit an, durch den Schlauch 502 die erwärmte Luft aus dieser Haube abzuziehen. Der Weg der Luft über das Vakuumregelventil 500 ist durch entsprechende Pfeile angedeutet.

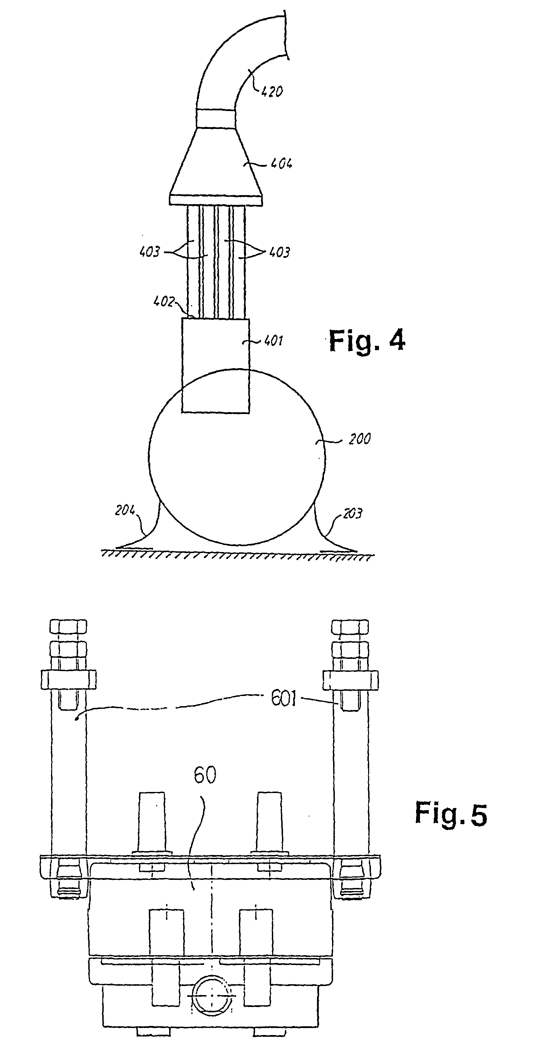

Erfindungsgemäß weist der Vakuumausgleichstank 200 einen sog. Dom 401 auf, in den die Leitung 40 bzw. 42, kommend vom Sicherheitsabscheider 90, mündet. Diese Mündung erfolgt jedoch nicht unmittelbar, sondern über ein Zwischenstück aus parallel geführten gewebelosen Gummischläuchen, wie nachfolgend anhand der Fig. 4 erläutert und beschrieben werden wird. In Fig. 2 sind die einzelnen Zufuhröffnungen 402 des Domes 401 angedeutet. Im Ausführungsbeispiel der Fig. 2 sind 13 Zuführungen und damit 13 Zuführöffnungen 402 vorgesehen. Die Anzahl kann je nach Förderleistung der Vakuumpumpe variieren. Durch diese Aufteilung in mehrere gewebelose elastische Schläuche wird im Verhältnis zu einem einfachen Schlauch mit derselben Luftströmungsgeschwindigkeit die Oberfläche wesentlich vergrössert. Dadurch wird der Luft ein erheblich stärkerer Reibungswiderstand entgegengesetzt. In Verbindung mit der besonderen Länge dieser Trennstrecke wird eine wirksame Barriere für die noch im Vakuumausgleichstank herrschenden Geräusche (Frequenzen) erzielt.

Weiterhin ist eine Ableitung 301 zum Puffertank 300 vorgesehen (vgl. Fig. 3). Mit dieser wird dem Vakuumausgleichstank 200 Luft zugeführt, die dann über die Stammleitung 150a und 150b der Vakuumpumpe 110 zugeführt wird. Es ist vorzugsweise vorgesehen, dass der Puffertank 300 akustisch vom Vakuumausgleichstank 200 entkoppelt wird. Dies erfolgt über die Zwischenschaltung einer flexiblen Leitung 302, bevorzugt eines Gummischlauchs mit geringem Querschnitt. Dadurch werden evtl. auftretende Schallereignisse, welche vom Pulsator 60 in den Puffertank 300 eingeleitet werden, gedämpft. Der Puffertank 300 ist in unmittelbarer Nähe des Pulsators 60 angeordnet. Das Volumen des Puffertankes 300 ist derart bemessen, dass die impulsartig einströmende Luft von einem Pulszyklus aus dem Pulsator 60, nur einen tolerierbaren Vakuumabfall im Puffertank 300 verursachen kann. Der Puffertank 300 ist elastisch an der Bausubstanz (Decke) oder am Melkstandgerüst befestigt. Der Durchmesser der Luftleitung 302 ist in Abhängigkeit eines bestimmten Leitwertes zu dimensionieren, damit die Vakuumhöhe am Ende eines jeden Pulszyklus genau wieder den Wert erreicht, wie er innerhalb des Vakuumausgleichstankes 200 herrscht. Für das Erzielen des benötigten Leitwertes ist es vorzugsweise möglich, in der Luftleitung 302 Abschnitte von unterschiedlicher Länge und Durchmesser aneinander zu koppeln.

Fig. 4 zeigt die Luftführung im Bereich des Doms 401. Der Vakuumausgleichstank 200 mit seinen Füssen 203, 204 ist lediglich schematisch dargestellt. Die übrigen Ein- und Ausgänge (151, 501 und 301) und das Vakuumregelventil 500 sind nicht dargestellt. Die vom Sicherheitsabscheider 90 kommende Leitung 420 mündet nun erfindungsgemäss nicht direkt über den Dom 401 in den Vakuumausgleichstank 200, sondern ist von diesem entkoppelt. Hierfür wird die Luft in einem Zwischenstück 404 aufgeteilt auf eine variable Anzahl an schlauchförmigen Trennelementen 403. Die schlauchförmigen Trennelemente 403 münden über die Öffnung 402 in den Dom 401 und damit in den Vakuumausgleichstank 200. Die Anzahl der schlauchförmigen Trennelemente 403 kann beliebig, insbesondere in Abhängigkeit von der Pumpleistung der Vakuumpumpe 110, gewählt werden. Vorzugsweise ist eine Anzahl zwischen vier und zwanzig schlauchförmiger Trennelemente 403 vorgesehen. Durch die erfindungsgemässe Gestaltung dieses Übergangs, anders ausgedrückt, der Entkoppelung zwischen Vakuumpumpe und Melksystem, erfolgt eine akustische Trennung; evtl. vorhandener Schall wird nicht weitergeleitet, sondern wird in den schlauchförmigen Trennelementen 403 absorbiert.

Eine weitere erfindungsgemässe Ausgestaltung ist in Fig. 5 für den Pulsator 60 dargestellt. Dieser wird flexibel fixiert, insbesondere über Gummischläuche 601 aufgehängt. Dadurch ist der Pulsator 60 nicht mehr starr mit der Luftleitung 300 verbunden, sondern über nachgiebige Elemente, insbesondere Gummischläuche, aufgehängt, wodurch die vom Pulsator 60 erzeugten Schlaggeräusche abgedämpft werden.

## Patentansprüche

1. Melkanlage mit:
- mindestens einem Vakuumpumpenaggregat (100),
- mindestens einem Vakuumausgleichstank (200),
- wenigstens einem Vakuumregelventil (500),
- wenigstens einer Luftleitung (30) oder einem Antrieb (110, 120) mit variierbarer Drehzahl zur Regulierung der Förderleistung des Vakuumpumpenaggregates (100),
- zumindest einem Pulsator (60),
- zumindest einem Melkzeug (70), das über einen Pulsschlauch (76) mit der Luftleitung (30) und über einen Milchschlauch (77) mit einer Milchleitung (81) verbunden ist,
- zumindest einer Milchleitung (81),
- zumindest einem Milchsammelbehälter (80), und
- zumindest einem Sicherheitsabscheider (90),
wobei das Vakuumregelventil (500) unmittelbar mit dem Vakuumausgleichstank (200) verbunden ist,
**dadurch gekennzeichnet,**
**dass** zwischen der vom Sicherheitsabscheider (90) kommenden Leitung (420) und dem Vakuumausgleichstank (200) mehrere Trennelemente (403) vorgesehen sind, die über einen Dom (401) in den Vakuumausgleichstank (200) münden.

2. Melkanlage nach Anspruch 1, **dadurch gekennzeichnet, dass** das Vakuumregelventil (500) über einen Diffusor (501) in den Vakuumausgleichstank (200) mündet.

3. Melkanlage nach Anspruch 1 oder 2, **dadurch gekennzeichnet, dass** das Vakuumregelventil (500) von einem zylinderförmigen Behälter (503) umschlossen ist.

4. Melkanlage nach einem der vorangegangenen Ansprüche, **dadurch gekennzeichnet, dass** das Vakuumregelventil (500) eine externe Luftzuführung, insbesondere über einen Schlauch (502), aufweist.

5. Melkanlage nach einem der vorangegangenen Ansprüche, **dadurch gekennzeichnet, dass** Vakuumpumpe (110) und Vakuumausgleichstank (200) miteinander über eine Stammleitung (150) verbunden sind, die die Form von insbesondere zwei gebogenen, flexiblen Schläuchen (150a, 150b) aufweist.

6. Melkanlage nach Anspruch 5, **dadurch gekennzeichnet, dass** die Stammleitung (150) in den Vakuumausgleichstank (200) tangential einmündet.

7. Melkanlage nach einem der vorangegangenen Ansprüche, **dadurch gekennzeichnet, dass** der Vakuumausgleichstank (200) eine Trennwand (201) aufweist.

8. Melkanlage nach einem der vorangegangenen Ansprüche, **dadurch gekennzeichnet, dass** der Vakuumausgleichstank (200) ein Filterelement (202) aufweist.

9. Melkanlage nach einem der vorangegangenen Ansprüche, **dadurch gekennzeichnet, dass** die vom Sicherheitsabscheider (90) kommende Leitung (420) und der Vakuumausgleichstank (200) über die Trennelemente (403), welche vorzugsweise in Form von 5 bis 20 Schläuchen ausgebildet sind, voneinander entkoppelt sind.

10. Melkanlage nach einem der vorangegangenen Ansprüche, **dadurch gekennzeichnet, dass** der Pulsator (60) flexibel fixiert, insbesondere über elastische Materialien (601) an der Bausubstanz, z.B. Decke, oder am Melkstandgerüst aufgehängt ist.

11. Melkanlage nach einem der vorangegangenen Ansprüche, **dadurch gekennzeichnet, dass** ein mit dem Vakuumausgleichstank (200) verbundener Puffertank (300) vorgesehen ist und dass zwischen Puffertank (300) und Vakuumausgleichstank (200) wenigstens ein flexibles, schlauchförmiges Zwischenstück (302), insbesondere ein gewebeloser Gummischlauch, als Luftleitung vorgesehen ist, die vorzugsweise in einem Bogen mit Radius von mindestens 30 cm und einem Winkel von etwa 90° angeordnet ist.

12. Melkanlage nach einem der vorangegangenen Ansprüche, **dadurch gekennzeichnet, dass** das Vakuumpumpenaggregat (100) und/oder der Vakuumausgleichstank (200) auf flexiblen Füßen (141, 142; 205, 206) angeordnet ist.

13. Melkanlage nach einem der vorangegangenen Ansprüche, **dadurch gekennzeichnet, dass** die Länge des Vakuumausgleichstankes (200) annähernd seinem Durchmesser entspricht.

14. Verfahren zur Reduktion von Schallemission in einer Melkanlage, insbesondere nach Anspruch 1, **dadurch gekennzeichnet, dass** die Strömungsgeschwindigkeit der Luft in den luftführenden Teilen (150, 200, 300, 302, 403, 420) der Melkanlage reduziert wird.

15. Verfahren nach Anspruch 14, **dadurch gekennzeichnet, dass** die Luft vom Vakuumausgleichstank (200) tangential zu ihrer Hauptströmungsrichtung im Vakuumausgleichstank (200), insbesondere in einem Winkel von 0 bis 30°, aus dem Vakuumausgleichstank (200) abgeführt wird.

16. Verfahren nach Anspruch 14 oder 15, **dadurch gekennzeichnet, dass** die Luft vom Vakuumausgleichstank (200) über insbesondere zwei Stammleitungen (150a, 150b) abgeführt wird.

17. Verfahren nach einem der Ansprüche 14 bis 16, **dadurch gekennzeichnet, dass** die Luftzufuhr vom Vakuumregelventil (500) zum Vakuumausgleichstank (200) über einen Diffusor (501) erfolgt.

18. Verfahren nach einem der Ansprüche 14 bis 17, **dadurch gekennzeichnet, dass** eine Entkopplung von vakuumerzeugendem System und Melksystem vorgenommen wird, insbesondere über eine Zwischenschaltung von schlauchförmigen Trennelementen (403) zwischen Vakuumausgleichstank (200) und der Leitung (420) vom Sicherheitsabscheider (90).

19. Verfahren nach einem der Ansprüche 14 bis 18, **dadurch gekennzeichnet, dass** ein mit dem Vakuumausgleichstank (200) verbundener Puffertank (300) vorgesehen ist, der insbesondere über Zwischenschaltung von zumindest einem flexiblen, luftführenden Schlauch (302) vom Vakuumausgleichstank (200) entkoppelt wird.

20. Verfahren nach Anspruch 17, **dadurch gekennzeichnet, dass** die Luft vom Diffusor (501) tangential zu ihrer Hauptströmungsrichtung im Vakuumausgleichstank (200) in letzteren einströmt.

## Claims

1. Milking installation with:
- at least one vacuum pump unit (100);
- at least one vacuum equalization tank (200);
- at least one vacuum control valve (500);
- at least one air pipe (30) or one drive (110, 120) with variable speed of rotation for regulation of the output of the vacuum pump unit (100);
- at least one pulsator (60);
- at least one milking device (70), which is attached to the air pipe (30) via a pulse hose (76) and to a milk pipe (81) via a milk hose (77);
- at least one milk pipe (81);
- at least one milk collection vessel (80), and
- at least one safety separator (90),
whereby the vacuum control valve (500) is attached directly to the vacuum equalization tank (200), **characterized in that**
several dividing elements (403) are provided between the pipe (420) arriving from the safety separator (90) and the vacuum equalization tank (200), which dividing elements discharge into the vacuum equalization tank (200) via a dome (401).

2. Milking installation in accordance with Patent Claim 1, **characterized in that** the vacuum control valve (500) discharges via a diffuser (501) into the vacuum equalization tank (200).

3. Milking installation in accordance with Patent Claims 1 or 2, **characterized in that** the vacuum control valve (500) is enclosed by a cylindrical container (503).

4. Milking installation in accordance with one of the foregoing Patent Claims, **characterized in that** the vacuum control valve (500) exhibits an external air supply, in particular via a hose (502).

5. Milking installation in accordance with one of the foregoing Patent Claims, **characterized in that** the vacuum pump (110) and the vacuum equalization tank (200) are connected together via a main pipe (150), which in particular exhibits the form of two curved flexible hoses (150a, 150b).

6. Milking installation in accordance with Patent Claim 5, **characterized in that** the main pipe (150) discharges tangentially into the vacuum equalization tank (200).

7. Milking installation in accordance with one of the foregoing Patent Claims, **characterized in that** the vacuum equalization tank (200) exhibits a dividing wall (201).

8. Milking installation in accordance with one of the foregoing Patent Claims, **characterized in that** the vacuum equalization tank (200) exhibits a filter element (202).

9. Milking installation in accordance with one of the foregoing Patent Claims, **characterized in that** the pipe (420) arriving from the safety separator (90) and the vacuum equalization tank (200) are separated from one another via the dividing elements (403), which are preferably executed in the form of 5 to 20 hoses.

10. Milking installation in accordance with one of the foregoing Patent Claims, **characterized in that** the pulsator (60) is flexibly attached, in particular suspended by means of elastic materials (601), to the fabric of the building or to the milking parlour framework.

11. Milking installation in accordance with one of the foregoing Patent Claims, **characterized in that** a buffer tank (300) connected to the vacuum equalization tank (200) is provided, and **in that** at least one flexible, hose-formed adapter (302), in particular a non-fibrous rubber hose, is provided between the buffer tank (300) and the vacuum equalization tank (200) as an air pipe, which is arranged preferably in a curve with a radius of at least 30 cm and an angle of about 90°.

12. Milking installation in accordance with one of the foregoing Patent Claims, **characterized in that** the vacuum pump unit (100) and/or the vacuum equalization tank (200) is arranged on flexible feet (141, 142; 205, 206).

13. Milking installation in accordance with one of the foregoing Patent Claims, **characterized in that** the length of the vacuum equalization tank (200) corresponds approximately to its diameter.

14. Method for the reduction of noise emissions in a milking installation, in particular in accordance with Patent Claim 1, **characterized in that** the flow velocity of the air in the air-carrying parts (150, 200, 300, 302, 403, 420) of the milking installation is reduced.

15. Method in accordance with Patent Claim 14, **characterized in that** the air from the vacuum equalization tank (200) is led away from the vacuum equalization tank (200) tangentially to its principal direction of flow in the vacuum equalization tank (200), in particular at an angle of 0 to 30°.

16. Method in accordance with Patent Claims 14 or 15, **characterized in that** the air from the vacuum equalization tank (200) is led away in particular via two main pipes (150a, 150b).

17. Method in accordance with one of Patent Claims 14 to 16, **characterized in that** the air supply from the vacuum control valve (500) to the vacuum equalization tank (200) takes place via a diffuser (501).

18. Method in accordance with one of Patent Claims 14 to 17, **characterized in that** separation from the vacuum-generating system and the milking system is undertaken, in particular via an adapter comprising hose-formed dividing elements (403) between the vacuum equalization tank (200) and the pipe (420) from the safety separator (90).

19. Method in accordance with one of Patent Claims 14 to 18, **characterized in that** a buffer tank (300) connected to the vacuum equalization tank (200) is provided, which buffer tank is separated from the vacuum equalization tank (200), in particular via an adapter comprising at least one flexible air-carrying hose (302).

20. Method in accordance with Patent Claim 17, **characterized in that** the air from the diffusor (501) flows into the vacuum equalization tank (200) tangentially to its principal direction of flow in the latter.

## Revendications

1. Installation de traite avec
- au moins un groupe générateur de vide (100
- au moins un réservoir de compensation de vide (200)
- au moins un régulateur de vide (500)
- au moins une canalisation à air (30) ou un moteur (110, 120) à vitesse variable pour le réglage du débit du groupe générateur de vide (100)
- au moins un pulsateur (60)
- au moins un faisceau trayeur (70) relié à la canalisation à air (30) par un tuyau de pulsation (76) et à un lactoduc (81) par un tuyau à lait (77)
- au moins un lactoduc (81 )
- au moins un réservoir collecteur de lait (80) et
- au moins un piège sanitaire (90),
le régulateur de vide (500) étant relié directement au réservoir de compensation de vide (200),
**caractérisée par le fait**
**qu'**entre le conduit (420) venant du piège sanitaire (90) et le réservoir de compensation de vide (200) plusieurs éléments séparateurs (403) sont prévus qui débouchent dans le réservoir de compensation de vide (200) par l'intermédiaire d'une coupole ((401).

2. Installation de traite selon la revendication 1, **caractérisée par le fait que** le régulateur de vide (500) débouche dans le réservoir de compensation de vide (200) à travers un diffuseur (501)

3. Installation de traite selon la revendication 1 ou 2, **caractérisée par le fait que** le régulateur de vide (500) est entouré par un récipient cylindrique (503).

4. Installation de traite selon l'une des revendications précédentes, **caractérisée par le fait que** le régulateur de vide (500) présente une amenée d'air externe, notamment au moyen d'un tuyau souple (502).

5. Installation de traite selon l'une des revendications précédentes, **caractérisée par le fait que** la pompe à vide (110) et le réservoir de compensation de vide (200) sont reliés entre eux par une canalisation principale (150) qui se présente en particulier sous la forme de deux tuyaux souples recourbés(150a, 150b).

6. Installation de traite selon la revendication 5, **caractérisée par le fait que** la canalisation principale (150) débouche dans le réservoir de compensation de vide (200) selon une courbe tangentielle.

7. Installation de traite selon l'une des revendications précédentes, **caractérisée par le fait que** le réservoir de compensation de vide (200) présente une cloison séparatrice (201).

8. Installation de traite selon l'une des revendications précédentes, **caractérisée par** le fait le réservoir de compensation de vide (200) présente un élément filtrant (202).

9. Installation de traite selon l'une des revendications précédentes, **caractérisée par le fait que** la conduite (420) venant du piège sanitaire (90) et le réservoir de compensation de vide (200) sont découplés par les éléments séparateurs (403) se présentant de préférence sous la forme de 5 à 20 tuyaux souples.

10. Installation de traite selon l'une des revendications précédentes, **caractérisée par le fait que** le pulsateur (60) est fixé sur l'édifice de façon souple, notamment au moyen de matériaux élastiques (601) ou suspendu à l'ossature de la salle de traite.

11. Installation de traite selon l'une des revendications précédentes, **caractérisée par le fait qu'**un réservoir tampon (300) relié au réservoir de compensation de vide (200) et qu'entre le réservoir tampon (300) et le réservoir de compensation de vide (200), il est prévu au moins un tronçon de tuyau flexible (302), notamment un flexible en caoutchouc sans tissu, comme conduit à air, présentant de préférence un coude d'au moins 30 cm de rayon et formant un angle d'environ 90°.

12. Installation de traite selon l'une des revendications précédentes, **caractérisée par le fait que** le groupe générateur de vide (100) et/ou le réservoir de compensation de vide (200) est placé sur des pieds souples (141, 142 ; 205, 206).

13. Installation de traite selon l'une des revendications précédentes, **caractérisée par le fait que** la longueur du réservoir de compensation de vide (200) est sensiblement égale à son diamètre.

14. Méthode de réduction des émissions sonores dans une installation de traite, notamment selon la revendication 1, **caractérisée par le fait que** la vitesse d'écoulement de l'air dans les parties de l'installation de traite où l'air est véhiculé (150, 200, 300, 302, 403, 420) est réduite.

15. Méthode selon la revendication 14, **caractérisée par le fait que** l'air venant du réservoir de compensation de vide (200) est évacué du réservoir de compensation de vide (200) selon une direction tangentielle à son flux principal à l'intérieur du réservoir de compensation de vide(200), notamment selon un angle de 0 à 30°.

16. Méthode selon la revendication 14 ou 15, **caractérisée par le fait que** l'air du réservoir de compensation de vide (200) est évacué en particulier par deux conduites principales (150a, 150b).

17. Méthode selon l'une des revendications 14 à 16, **caractérisée par le fait que** l'amenée d'air du régulateur de vide (500) au réservoir de compensation de vide (200) s'effectue à travers un diffuseur (501)

18. Méthode selon l'une des revendications 14 à 17, **caractérisée par le fait qu'**un découplage a lieu entre le système générateur de vide et le système de traite, notamment en intercalant des éléments de séparation se présentant sous la forme de tuyaux flexibles (403) entre le réservoir de compensation de vide (200) et la conduite (420) venant du piège sanitaire (90)

19. Méthode selon l'une des revendications 14 à 18, **caractérisée par le fait qu'**il est prévu un réservoir tampon (300) relié au réservoir de compensation de vide (200), ce réservoir tampon (300) étant découplé du réservoir de compensation de vide (200) notamment en intercalant au moins un tuyau flexible transportant de l'air (302).

20. Méthode selon la revendication 17, **caractérisée par le fait que** l'air du diffuseur (501) pénètre dans le réservoir de compensation de vide (200) selon une direction tangentielle à son flux principal dans ce même réservoir.
